# EUROPÄISCHE PATENTSCHRIFT

(11) **EP 0 307 542 B1**
(45) Veröffentlichungstag und Bekanntmachung des Hinweises auf die Patenterteilung: **10.11.1993**
(21) Anmeldenummer: 88106633.6
(22) Anmeldetag: 26.04.1988
(51) Int. Cl.: H02B 13/02, H02B 1/14

(54) **Mittelspannungsschaltanlage mit Fernbetätigung**
Medium voltage switchgear with remote control
Installation de commutation à moyenne tension avec commande à distance

(30) Priorität: 18.09.1987 DE 3731442
(43) Veröffentlichungstag der Anmeldung: 22.03.1989
(73) Patentinhaber: Felten & Guilleaume Energietechnik AG, D-51058 Köln (DE)
(72) Erfinder: Deharde, Horst, D-4151 Kempen 1 (DE); Dirks, Rolf, D-4156 Willich 4 (DE); Tisch, Udo, D-4150 Krefeld (DE)

(56) Entgegenhaltungen:
- DE-A- 1 953 293
- FR-A- 1 126 502

## Beschreibung

Die Erfindung betrifft eine Mittelspannungsschaltanlage mit Fernbetätigung gemäß dem Oberbegriff des Anspruchs 1.

Unter den Schaltanlagen nehmen Mittelspannungsschaltanlagen in gekapselter Ausführung wegen ihrer kleinen Abmessungen und einem minimalen Wartungsaufwand einen besonderen Platz ein. Es besteht ferner das Bestreben, für derartige Anlagen eine sinnfällige Bedienbarkeit zu schaffen. Bekannt sind hier Antriebe, die mittels Hebel bedient werden. Große Schaltanlagen erhalten oft eine Schaltwarte zur zentralen Fernbetätigung der ganzen Anlage. Der Einsatz fernbetätigter Anlagen beschränkt sich jedoch auf Höchstspannungsschaltanlagen.

Eine Mittelspannungsschaltanlage mit einem gasgefüllten, elektrischen Schaltgehäuse für mehrere Schaltgeräte, sowie mit einem Gehäuse für die zugehörigen Antriebe, die über jeweils eine an einer Frontplatine des Antriebsgehäuses herausgeführten Schaltwelle bedienbar sind, ist bereits aus dem Prospekt der Felten & Guilleaume Energietechnik GmbH, "SF₆-isolierte Lastschaltanlage Typ GA 24", S 2, 3, 10 und 18, Ausgabe 10.86 bekannt.- Diese Schaltanlage ist nicht mit einem Motorantrieb ausrüstbar. Es ist jedoch möglich, die Kabelschalter vom Zuleitungsfeld, sogenannte Z- Schalter mit einer gespeicherten Ein- oder Aus-Schaltung auszurüsten. Nach dieser einen Fernschaltung muß der Antrieb wieder von Hand vorgespannt werden.

Es ist auch bekannt, Schalter mit Handbetrieb in einer Mittelspannungsschaltanlage nachträglich auf Fernsteuerung umzurüsten. Hierzu wird der Schalter mit Handantrieb herausgenommen und dafür ein solcher mit Motorantrieb eingesetzt (Prospekt "Fernsteuerung" der Firma Fritz Driescher, Abdruck in der "Elektrizitätswirtschaft" 1972).

Der Erfindung liegt nun die Aufgabe zugrunde, eine Mittelspannungsschaltanlage zu schaffen, die sich mit einfachen Mitteln fernbetätigen läßt.

Diese Aufgabe wird erfindungsgemäß durch die im Kennzeichen des Anspruchs 1 angegebene Merkmalskombination gelöst.

Die mit der Erfindung erzielten Vorteile bestehen darin, daß man durch die Austauschbarkeit einer Frontplatine des Antriebsgehäuses gegen eine Frontplatine mit Elementen für eine Fernbetätigung einschließlich eines Hydraulikaggregats im Sockel nicht nur neue fernbetätigbare Mittelspannungsschaltanlagen schaffen, sondern auch bestehende Mittelspannungsschaltanlagen entsprechend nachrüsten kann.

Die weitere Ausgestaltung der Erfindung ist in Unteransprüchen angegeben.

Eine besondere Bedeutung hat hierbei ein Koppelglied, das die Verbindung zwischen einem Schaltzylinder und der Schaltwelle eines Antriebes herstellt (Anspruch 4). Dieses Koppelglied läßt sich verhältnismäßig einfach herstellen und ist dabei so geschaffen, daß es außerdem noch einen Hand-Not-Betätigungshebel aufnehmen kann.

Ein Ausführungsbeispiel der Erfindung ist in Zeichnungen dargestellt und wird im folgenden näher erläutert. Es zeigen
- Fig. 1: eine austauschbare Frontplatine mit Elementen für eine Fernbetätigung gegen eine konventionelle Frontplatine in perspektivischer Darstellung
- Fig. 2: ein hierzu gehörendes Hydraulikaggregat, in Seitenansicht
- Fig. 3: eine vollständige für Fernbetätigung eingerichtete Mittelspannungsschaltanlage in perspektivischer Darstellung
- Fig. 4: ein Koppelglied in Vorderansicht
- Fig. 5: dieses Koppelglied in Draufsicht
- Fig. 6: ein alternatives Koppelglied in Vorderansicht
- Fig. 7: dieses Koppelglied in Draufsicht.

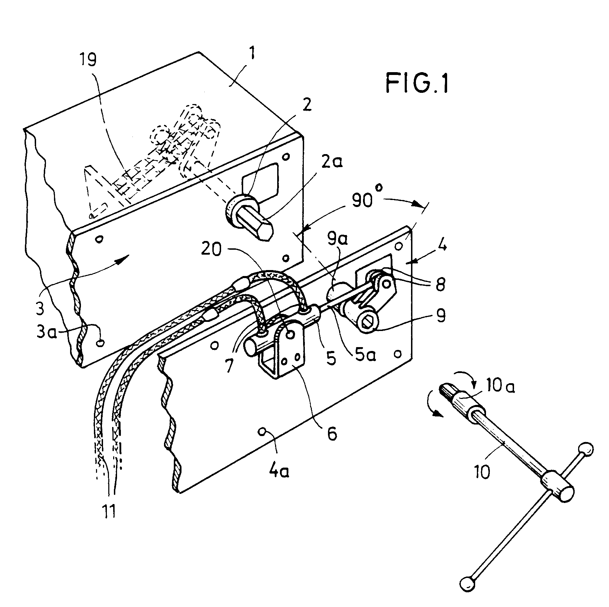

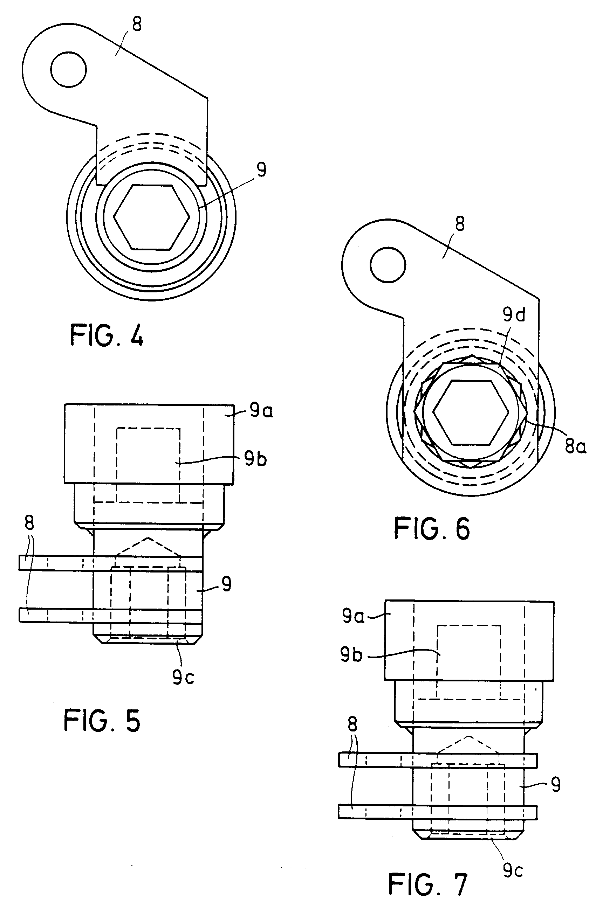

Nach Fig. 1 ist ein Antriebsgehäuse 1 einer Mittelspannungsschaltanlage dargestellt, aus welchem eine Schaltwelle 2 durch eine Frontplatine 3 herausgeführt ist. Die Schaltwelle selbst ist außerhalb der Frontplatine mit einem Außensechskant 2a für ein Bedienungselement (nicht dargestellt) abgeschlossen. Die Frontplatine 3 kann durch eine Frontplatine 4, die die gleichen Abmessungen wie die Frontplatine 3 aufweist, ausgetauscht werden. Beide Platinen sind mit entsprechenden Befestigungsbohrungen 3a und 4a versehen, um die Frontplatinen mit entsprechenden Befestigungsmitteln am Antriebsgehäuse 1 befestigen zu können. An der Außenseite der Frontplatine 4 befindet sich je Schaltgerät ein Schaltzylinder 5 mit einer Kolbenstange 5a. Für die Befestigung eines jeden Schaltzylinders 5 ist eine Befestigungsplatte 6 vorgesehen. An jeden Schaltzylinder 5 sind zwei Druckschläuche 7 mit Rohrverschraubungen angeschlossen. Ein Koppelglied, bestehend aus einem Doppelhebel 8 und einer Wellenverlängerung 9, stellt die Verbindung zwischen der Kolbenstange 5a und der Schaltwelle 2 her. Der Doppelhebel kann hierbei fest oder lösbar mit der Wellenverlängerung verbunden sein. Die Wellenverlängerung 9 endet an der zur Schaltwelle 2 gewandten Seite mit einem Rohr 9a. Innerhalb dieses Rohres befindet sich ein erhabener Sechskant 9b (Fig. 5 und 7). Die Wellenverlängerung 9 ist so geschaffen, daß ein Hand-Not-Betätigungshebel aufsteckbar ist, der mit einem Freilauf 10a ausgestattet ist.

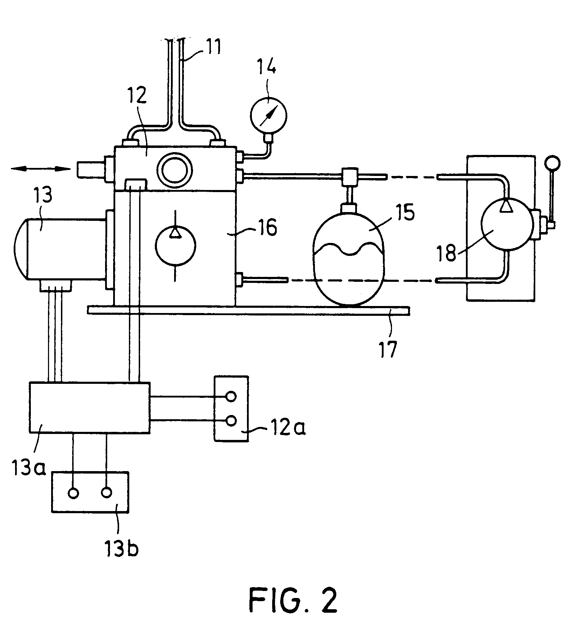

Die Druckschläuche 7 mit Rohrverschraubungen sind mit Druckleitungen 11 verbunden, die die Verbindung zum Hydraulikaggregat (Fig. 2) herstellen. Als Antrieb für jedes Schaltgerät ist ein Sprungantrieb 19 vorgesehen, der in direkter Verbindung mit der Schaltwelle 2 steht. Der Schaltzylinder ist in einem Drehlager 20 gelagert, damit der Schaltzylinder die beim Ein- und Ausschalten des Schaltgerätes entstehende Bewegung nachvollziehen kann.

Nach Fig. 2 sind die ankommenden Druckleitungen 11 mit dem Hydraulikaggregat verbunden. Dieses Hydraulikaggregat ist pro Schaltanlage einmal vorgesehen. Zu dem Hydraulikaggregat gehören im einzelnen ein Dreiwegeventil 12 pro Schaltgerät, eine dazugehörende Ventilsteuerung 12a, ein Elektromotor 13, eine dazugehörende Motorsteuerung 13a und ein Druckschalter 13b, sowie ein Manometer 14, ein Schaltspeicher 15 und eine Öldruckpumpe 16. Das Hydraulikaggregat erzeugt den notwendigen Schaltdruck. Der Schaltspeicher 15 ist als zusätzliche Einrichtung gedacht, womit insgesamt drei Schaltungen von Kabelschaltern (Z-Schalter) oder drei Schaltungen von Transformator-Schalter (T-Schalter) gespeichert und abgerufen werden können. Dies könnte sinnvoll sein bei Ausfall der Hilfsspannung für das Hydraulikaggregat. Soll auch die Fernbetätigung der Ventile 12 ohne Hilfsspannung möglich sein, so wird ein elektrischer Kondensator-Speicher pro Schaltimpuls (Kondensator-Auslösegerät) benötigt. Für den erforderlichen Öldruck sorgt die elektrische Öldruckpumpe 16 oder eine Handpumpe 18. Das Manometer 14 zeigt den jeweiligen Öldruck an. Um das Hydraulikaggregat im Sockel einer Schaltanlage unterbringen zu können, ist eine Konsole 17 vorgesehen.

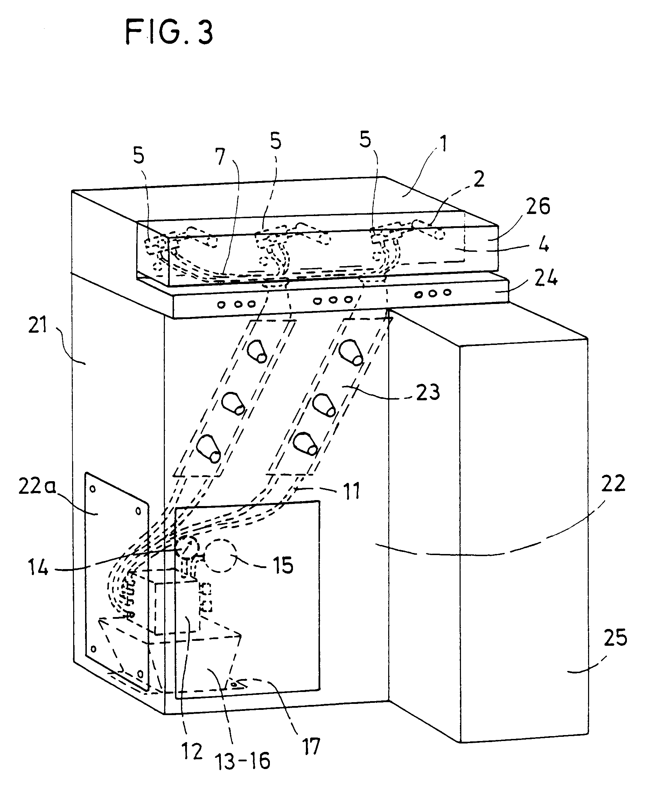

Figur 3 zeigt eine vollständige Schaltanlage mit einem Hydraulikaggregat 12 bis 16, das im Anlagensockel 22 untergebracht ist. Hierbei ist die Zugänglichkeit durch eine abnehmbare Sockelklappe 22a gesichert. Die Druckleitungen 11 sind in Stahlschächten 23 zu den einzelnen Schaltzylindern 5 geführt. Zu Meßzwecken dient eine Meßleiste 24, die dem Antriebsgehäuse 1 vorgelagert ist. Mit 25 ist eine Sicherungsabdeckung bezeichnet. Schließlich dient eine Klarsicht-Schutzhaube 26 der Abdeckung der mit den Schaltzylindern 5 bestückten Frontplatine 4.

In den Figuren 4 und 5 sind Einzelheiten des Koppelgliedes 8,9 erkennbar. Hierbei handelt es sich um eine Ausführung, bei welcher der Doppelhebel 8 fest mit der Wellenverlängerung 9 verbunden ist. Die Wellenverlängerung 9 endet in einem Rohr 9a, in welchem im Inneren ein erhabener Sechskant 9b angeordnet ist. An der zum Hand-Not-Betätigungshebel 10 (nicht dargestellt) gewandten Seite befindet sich ein korrespondierender Innensechskant 9c, der das Einstecken dieses Hebels ermöglicht.

In den Figuren 6 und 7 ist eine Alternative zum Koppelglied 8,9 angegeben. Hierbei ist der Doppelhebel auf die Wellenverlängerung 9 aufgesteckt. Zu diesem Zweck ist die Wellenverlängerung 9 an den Aufsteckstellen mit einem Außensechskant 9d ausgestattet, während der Doppelhebel 8 an diesen Stellen mit korrespondierenden innensechskantigen Ausnehmungen 8 ausgestattet ist.

## Patentansprüche

1. Mittelspannungsschaltanlage mit Fernbetätigung, mit einem gasgefüllten elektrischen Schaltgehäuse **(21),** mit mehreren Schaltgeräten, mit einem Gehäuse **(1)** für die zugehörigen Antriebe, die über jeweils eine an einer Frontplatine **(3)** des Antriebsgehäuses **(1)** herausgeführten Schaltwelle **(2)** bedienbar sind, **dadurch gekennzeichnet**, daß die Frontplatine **(3)** des Antriebsgehäuses **(1)** gegen eine in ihren Abmessungen gleiche Frontplatine **(4)** austauschbar ist, die mit einer der Anzahl der Schaltgeräte entsprechenden Anzahl von Schaltzylindern **(5)** versehen ist, deren Kolbenstangen **(5a)** jeweils über ein Koppelglied **(8, 9)** mit einer der Schaltwellen **(2)** kraftschlüssig verbindbar sind, und daß ein an sich bekanntes Hydraulikaggregat **(12 -16)** zur Erzeugung eines Schaltdruckes in den Schaltzylindern in den Sockel **(25)** des Schaltgehäuses **(21)** eingesetzt ist und daß das Hydraulikaggregat mit den Schaltzylindern **(5)** über Druckleitungen **(7, 11)** verbunden ist.

2. Mittelspannungsschaltanlage nach Anspruch 1, dadurch gekennzeichnet, daß die Frontplatine (4) als aufsteckbare Trägerplatte ausgebildet ist, an welcher die Schaltzylinder (5) parallel zur Trägerplatte mittels Befestigungsplatten (6) gehaltert sind, die derart mit einem Drehlager (20) versehen sind, daß die Schaltzylinder (5) um ihre Querachse schwenkbar sind.

3. Mittelspannungsschaltanlage nach den Ansprüchen 1 und 2, dadurch gekennzeichnet, daß die Schaltzylinder (5) doppelseitig wirkend ausgebildet sind.

4. Mittelspannungsschaltanlage nach den Ansprüchen 1 bis 3, dadurch gekennzeichnet, daß das Koppelglied (8,9) aus einem mit der Kolbenstange (5a) verbundenen Doppelhebel (8) und einer auf die Schaltwelle aufsteckbaren Wellenverlängerung (9) besteht, die an der zur Schaltwelle (2) gewandten Seite als Rohr (9a) ausgebildet ist und im Inneren des Rohres einen erhabenen Sechskant (9b) aufweist, während die von der Schaltwelle (2) abgewandte Seite eine innensechskantige Ausnehmung (9c) besitzt.

5. Mittelspannungsschaltanlage nach den Ansprüchen 1 bis 4, dadurch gekennzeichnet, daß der Doppelhebel (8) mit der Wellenverlängerung (9) fest verbunden ist.

6. Mittelspannungsschaltanlage nach den Ansprüchen 1 bis 4, dadurch gekennzeichnet, daß der Doppelhebel (8) im Verbindungsbereich mit der Wellenverlängerung (9) eine innensechskantige Ausnehmung (8a) aufweist, die korrespondierend zu einem Außensechskant (9d) der Wellenverlängerung (9) ausgebildet ist.

7. Mittelspannungsschaltanlage nach den Ansprüchen 1 bis 6, dadurch gekennzeichnet, daß jeder Schaltzylinder (5) zum Ein-bzw. Ausschalten ein Ventil (12) aufweist, das als Dreiwegeventil mit automatischer Mitterückstellung ausgebildet ist.

8. Mittelspannungsschaltanlage nach den Ansprüchen 1 bis 7, dadurch gekennzeichnet, daß eine der Anzahl der Schaltzylinder (5) entsprechende Anzahl von Ventilen (12) in einem Steuerblock zusammengefaßt ist.

9. Mittelspannungsschaltanlage nach den Ansprüchen 1 bis 8, dadurch gekennzeichnet, daß das Hydraulikaggregat von einem Elektromotor (13) mit einer Motorsteuerung (13a) angetrieben wird, die mit einem Druckschalter (13b) ausgestattet und mit einer Ventilsteuerung (12a) verbunden ist.

10. Mittelspannungsschaltanlage nach den Ansprüchen 1 bis 9, dadurch gekennzeichnet, daß ein Schaltspeicher (15) zur Vorspeicherung des Drucks im Hydraulikaggregat angeordnet ist.

11. Mittelspannungsschaltanlage nach den Ansprüchen 1 bis 10, dadurch gekennzeichnet, daß das motorgesteuerte Hydraulikaggregat durch ein Hydraulikaggregat für manuelles Aufladen des Schaltspeichers (15) mit einer Handpumpe (18) tauschbar ist.

12. Mittelspannungsschaltanlage nach den Ansprüchen 1 bis 11, dadurch gekennzeichnet, daß die Druckleitungen (11) flexibel sind und an ihren Enden Druckschläuche mit Rohrverschraubungen (7) besitzen.

13. Mittelspannungsschaltanlage nach den Ansprüchen 1 bis 12, dadurch gekennzeichnet, daß die Druckleitungen (11) vom Steuerblock zu den Schaltzylindern (5) in Stahlschächten (23) geführt sind.

14. Mittelspannungsschaltanlage nach den Ansprüchen 1 bis 13, dadurch gekennzeichnet, daß die Schaltzylinder (5) mit einer Klarsicht-Schutzhaube (26) abgedeckt sind.

15. Mittelspannungsschaltanlage nach den Ansprüchen 1 bis 14, dadurch gekennzeichnet, daß die netzabhängige Stromversorgung zur Ventilsteuerung auf Batterie- oder Kondensatorbetrieb umstellbar ist.

## Claims

1. A medium voltage switchgear with remote control, with a gas-filled electrical switchgear housing (21), with several switching devices, with a housing (1) for the associated drives which may be operated by way of a respective operating shaft (2) guided out on a front panel (3) of the drive housing (1), characterised in that the front panel (3) of the drive housing (1) may be exchanged for a front panel (4) which is identical in its dimensions and which is provided with a number of switching cylinders (5) corresponding to the number of switching devices, the piston rods (5a) of which may be connected with friction fit in each case by way of a coupling element (8, 9) to one of the operating shafts (2), and in that a hydraulic unit (12-16), known per se, for producing a switching pressure in the switching cylinders is installed in the base (25) of the switchgear housing (21), and in that the hydraulic unit is connected to the switching cylinders (5) by way of pressure lines (7, 11).

2. A medium voltage switchgear according to claim 1, characterised in that the front panel (4) is designed as an attachable carrier plate on which the switching cylinders (5) are mounted parallel to the carrier plate by means of attachment plates (6) which are provided with a pivot bearing (20) such that the switching cylinders (5) are pivotable about their transverse axis.

3. A medium voltage switchgear according to claims 1 and 2, characterised in that the switching cylinders (5) are designed to act bilaterally.

4. A medium voltage switchgear according to claims 1 to 3, characterised in that the coupling element (8, 9) consists of a double lever (8), connected to the piston rod (5a), and a shaft extension (9) which is mountable on the operating shaft and which, on the side directed towards the operating shaft (2), is designed as a tube (9a) and in the interior of the tube has a raised hexagon (9b), while the side directed away from the operating shaft (2) has an internal hexagonal recess (9c).

5. A medium voltage switchgear according to claims 1 to 4, characterised in that the double lever (8) is securely connected to the shaft extension (9).

6. A medium voltage switchgear according to claims 1 to 4, characterised in that the double lever (8) has in the area of connection to the shaft extension (9) an internal hexagonal recess (8a) which is designed so as to correspond to an external hexagon (9d) of the shaft extension (9).

7. A medium voltage switchgear according to claims 1 to 6, characterised in that each switching cylinder (5) has for on-or off-switching a valve (12) which is designed as a three-way valve with automatic centre resetting.

8. A medium voltage switchgear according to claims 1 to 7, characterised in that a number of valves (12) corresponding to the number of switching cylinders (5) is combined in a control block.

9. A medium voltage switchgear according to claims 1 to 8, characterised in that the hydraulic unit is actuated by an electric motor (13) with a motor control (13a) which is provided with a pressure switch (13b) and is connected to a valve control (12a).

10. A medium voltage switchgear according to claims 1 to 9, characterised in that a switching store (15) is arranged in the hydraulic unit for pre-storing the pressure.

11. A medium voltage switchgear according to claims 1 to 10, characterised in that the motor-controlled hydraulic unit may be replaced by a hydraulic unit for manual charging of the switching store (15) with a hand pump (18).

12. A medium voltage switchgear according to claims 1 to 11, characterised in that the pressure lines (11) are flexible and at their ends have pressure hoses with screw pipe couplings (7).

13. A medium voltage switchgear according to claims 1 to 12, characterised in that the pressure lines (11) are run from the control block to the switching cylinders (5) in steel shafts (23).

14. A medium voltage switchgear according to claims 1 to 13, characterised in that the switching clyinders (5) are covered with a transparent protective cap (26).

15. A medium voltage switchgear according to claims 1 to 14, characterised in that the mains-dependent current supply for the valve control may be changed over to battery or capacitor operation.

## Revendications

1. Installation de commutation à moyenne tension avec commande à distance, avec un boîtier électrique de commutation (21), rempli de gaz avec plusieurs appareils de commutation, avec un boîtier (1) pour les entraînements correspondants, qui sont susceptibles d'être commandés respectivement par un arbre de commutation (2) amené à l'extérieur sur une platine frontale (3) du boîtier d'entraînement (1), installation de commutation à moyenne tension caractérisée en ce que la platine frontale (3) du boîtier d'entraînement (1) est susceptible d'être échangée contre une platine frontale (4) de dimensions identiques, qui est munie d'un nombre de vérins de commutation (5) correspondant au nombre des appareils de commutation, vérins dont les tiges de piston (5a) sont respectivement susceptibles d'être reliées, avec interpénétration par la force, par l'intermédiaire d'un organe de couplage (8, 9) à un des arbres de commutation (2), et en ce qu'un équipement hydraulique (12 - 16), connu en soi, prévu pour créer une pression de commutation dans les vérins de commutation, est logé dans le socle (25) du boîtier de commutation (21), et en ce que cet équipement hydraulique est relié aux vérins de commutation (5) par l'intermédiaire de canalisation (7, 11) résistant à la pression.

2. Installation de commutation à moyenne tension selon la revendication 1, caractérisée en ce que la platine frontale (4) revêt la forme d'une plaque porteuse susceptible d'être fixée, sur laquelle les vérins de commutation (5) sont maintenus parallèlement à la plaque porteuse par des plaquettes de fixation (6) qui sont munies d'un palier rotatif (20), de sorte que les vérins de commutation (5) sont susceptibles de pivoter autour de leur axe transversal.

3. Installation de commutation à moyenne tension selon les revendications 1 et 2, caractérisée en ce que les vérins de commutation (5) sont prévus pour agir des deux côtés.

4. Installation de commutation à moyenne tension selon les revendications 1 à 3, caractérisée en ce que l'organe de couplage (8, 9) est constitué par un levier double (8) relié à la tige de piston (5a) et par un prolongement d'arbre (9) susceptible d'être emboîté sur l'arbre de commutation et qui, sur son côté tourné vers l'arbre de commutation (2), revêt la forme d'un tube (9a) avec, à l'intérieur de ce tube, un six-pans en saillie (9b), tandis que son côté opposé à l'arbre de commutation comporte un évidement en forme de six-pans interne (9c).

5. Installation de commutation à moyenne tension selon les revendications 1 à 4, caractérisée en ce que le levier double (8) est relié de façon fixe au prolongement d'arbre (9).

6. Installation de commutation à moyenne tension selon les revendications 1 à 4, caractérisée en ce que le levier double (8) comporte, dans sa zone de liaison avec le prolongement d'arbre (9), un évidement (8a) en forme de six-pans interne, qui est réalisé de façon correspondante à un six-pans externe (9d) du prolongement d'arbre (9).

7. Installation de commutation à moyenne tension selon les revendications 1 à 6, caractérisée en ce que chaque vérin de commutation (5) comporte pour l'enclenchement ou le déclenchement un distributeur (12) qui est réalisé sous la forme d'un distributeur à trois voies avec une position de rappel médiane automatique.

8. Installation de commutation à moyenne tension selon les revendications 1 à 7, caractérisée en ce qu'un nombre de distributeurs (12) correspondant au nombre des vérins de commutation (5) est rassemblé dans un bloc de commande.

9. Installation de commutation à moyenne tension selon les revendications 1 à 8, caractérisée en ce que l'équipement hydraulique est entraîné par un moteur électrique (13) avec une commande de moteur (13a), qui est équipée d'un commutateur à pression (13b) et est relié à une commande de distributeur (12a).

10. Installation de commutation à moyenne tension selon les revendications 1 à 9, caractérisée en ce qu'un accumulateur de commutation (15) pour la pré-accumulation de la pression, est disposé dans 1'équipement hydraulique.

11. Installation de commutation à moyenne tension selon les revendications 1 à 10, caractérisée en ce que l'équipement hydraulique motorisé peut être remplacé par un équipement hydraulique pour le changement manuel de l'accumulateur de commutation (15) avec une pompe à main (18).

12. Installation de commutation à moyenne tension selon les revendications 1 à 11, caractérisée en ce que les canalisations (11) résistant à la pression sont flexibles et comportent à leurs extrémités des flexibles résistant à la pression avec des vissages tubulaires (7).

13. Installation de commutation à moyenne tension selon les revendications 1 à 12, caractérisée en ce que les canalisations (11) résistant à la pression sont guidées du bloc de commande aux vérins de commutation (5) dans des gaines en acier (23).

14. Installation de commutation à moyenne tension selon les revendications 1 à 13, caractérisée en ce que les vérins de commutation (5) sont recouverts par un capot de protection transparent (26).

15. Installation de commutation à moyenne tension selon les revendications 1 à 14, caractérisée en ce que l'alimentation en courant dépendante du réseau pour la commande des distributeurs peut être convertie en un fonctionnement sur batterie ou condensateur.
